# EUROPÄISCHE PATENTSCHRIFT

(11) **EP 1 183 878 B1**
(45) Veröffentlichungstag und Bekanntmachung des Hinweises auf die Patenterteilung: **21.12.2005**
(21) Anmeldenummer: 00943629.6
(22) Anmeldetag: 19.05.2000
(51) Int. Cl.: H04Q 3/00

(54) **VERFAHREN ZUM ADMINISTRIEREN VON ZUSATZDIENSTEN BEI TELEKOMMUNIKATIONSEINRICHTUNGEN**
METHOD FOR ADMINISTERING SUPPLEMENTARY SERVICES IN TELECOMMUNICATIONS DEVICES
PROCEDE POUR ADMINISTRER DES SERVICES SUPPLEMENTAIRES DANS DES DISPOSITIFS DE TELECOMMUNICATION

(30) Priorität: 07.06.1999 DE 19927010
(43) Veröffentlichungstag der Anmeldung: 06.03.2002
(73) Patentinhaber: SIEMENS AKTIENGESELLSCHAFT, 80333 München (DE)
(72) Erfinder: ASCHIR, Alexander, D-13581 Berlin (DE)
(86) Internationale Anmeldenummer: PCT/DE2000/001659
(87) Internationale Veröffentlichungsnummer: WO 2000/076225

(56) Entgegenhaltungen:
- WO-A-00/46963
- WO-A-99/27742

## Beschreibung

Die Erfindung betrifft intelligente Netze im Bereich der Telekommunikation, insbesondere des Mobilfunks, die dem Nutzer verschiedene Dienste bereitstellen. Derartige Dienste umfassen beispielsweise einen Vorauszahlungsservice (Prepaid Service / PPS), virtuelle private Netze (Virtual Private Network / VPN) oder einen persönlichen Nummerservice (Personal Number Service / PNS), mit dem ein Teilnehmer auf verschiedenen Stationen oder innerhalb verschiedener Kommunikationsnetze stets unter derselben Teilnehmernummer erreichbar ist. Ferner ist aus der WO 99/27742 bekannt, dass auf Anfrage ein Mobilfunkgerät innerhalb eines Netzes hinsichtlich seiner geographischen Lage genau lokalisiert werden kann. Die Position wird auf einem Display des Mobilfunkgerätes in einem vom Nutzer wählbaren Format angezeigt. Der Nutzer kann dabei den Dienst der Lokalisierung des Mobilfunkgerätes über das Display des Mobilfunkgerätes aktivieren.

Neben diesen primären Diensten nimmt das Angebot an benutzerindividuell verfügbaren und auswähl/abwählbaren Leistungen oder Diensten (Zusatzdienste) zu. Derartige zusätzliche Leistungen sind beispielsweise unter den Begriffen "Black-List" (Liste von Teilnehmern, deren Anruf beispielsweise unerwünscht ist und ausgefiltert werden soll), "White-List" (Teilnehmer, deren Anrufe erwünscht sind), "Friends and Family" (bevorzugte Teilnehmer, z.B. im Zusammenhang mit Preisrabatten) oder "Hunting-List" (sequentielle Weiterschaltung zwischen mehreren Teilnehmern, solange bis einer der Teilnehmer erreichbar ist) bekannt.

Eine benutzer- bzw. teilnehmerindividuelle Einstellung (Administrierung) der Zusatzdienste (beispielsweise Hinzufügung oder Streichung einer Teilnehmeridentifikationsnummer in einen bzw. aus einem der vorbeschriebenen Dienste) über an sich bekannte DTMF-Menüs ist vergleichsweise aufwendig, weil von dem Teilnehmer in sprachbasierten Dialogen verschiedene Wahloptionen und anschließende manuelle Eingaben verlangt werden. Will beispielsweise der Teilnehmer von seiner Teilnehmerstation aus (beispielsweise einem Mobilfunktelefon/Handy) eine weitere Rufnummer in seine "Black-List" eingeben, müßte er zunächst eine bestimmte Service-Nummer anwählen. Erst diese erlaubt ihm - ggf. nach vorheriger Identifizierung und Audentifizierung - die manuelle Eingabe der jeweiligen Rufnummer. Diese Eingabe erfolgt als lange Zahlen/Datenkolonne, die zur Bestätigung wiederholt (angesagt) wird. Diese Prozedur birgt eine Vielzahl.von Fehlerquellen und ist vergleichsweise zeitaufwendig.

Die Aufgabe der vorliegenden Erfindung besteht in der Schaffung eines Verfahrens, mit dem Zusatzleistungen in intelligenten Netzen mit einfachen Mitteln teilnehmerindividuell eingestellt, abgestellt oder modifiziert werden können (Administrierung).

Diese Aufgabe wird erfindungsgemäß gelöst durch ein Verfahren zum Administrieren von Zusatzdiensten bei Telekommunikationseinrichtungen, wobei ein Ruf von einer anrufenden Teilnehmerstation einem intelligenten Knoten zugeleitet wird, der teilnehmerseitig aktivierte Zusatzdienste ablaufen läßt und ggf. den Ruf zu der angerufenen Teilnehmerstation durchstellt und auf Basis der verfügbaren Zusatzdiehste ein Bedienungsmenü generiert wird, das der angerufenen Teilnehmerstation übermittelt wird und das die Administrierung der Zusatzdienste in Bezug auf die anrufende Teilnehmerstation ermöglicht.

Bei dem erfindungsgemäßen Verfahren wird bei einem ankommenden Ruf der jeweils zugeordnete intelligente Knoten angesprochen (getriggert). Dies kann dadurch realisiert sein, daß bei einem in der Zielvermittlungsstelle ankommenden Ruf anschließend der der (angerufenen) Teilnehmeridentifikation zugeordnete intelligente Knoten angesprochen wird. Die Zuständigkeit des auch als "Service Control Point" (SCP) bezeichneten Knotens hängt von verschiedenen Kriterien ab und richtet sich beispielsweise nach dem jeweils beim Routing durch das Netz festgestellten aktuellen Aufenthaltsort der angerufenen Teilnehmerstation. Der Knoten wird seinerseits z. B. im Rahmen des Verbindungsaufbaus unter Benutzung eines Festnetzes von einer dem Aufenthaltsort der angerufenen Teilnehmerstation zugeordneten Vermittlungsstelle ("Mobil Switch", MSC) angesprochen.

In dem intelligenten Knoten oder in einer anderen geeigneten Ablage (beispielsweise im sog. "Service Management Point"/SMP, der periodisch aktualisierte gespiegelte Daten aus dem Knoten SCP enthält) werden die aktuell für die individuelle Teilnehmerstation verfügbaren und teilnehmerseitig aktivierten Zusatzdienste abgerufen und ablaufen gelassen. Beispielsweise kann dieser Ablauf ergeben, daß die Teilnehmeridentifikationsnummer der anrufenden Teilnehmerstation in der "White-List" enthalten ist und somit zur angerufenen Teilnehmerstation durchgestellt wird.

Ein wesentlicher Aspekt der Erfindung besteht darin, daß auf Basis der beispielsweise aus dem intelligenten Knoten verfügbaren Daten über die Zusatzdienste ein Bedienungsmenü generiert wird, das der angerufenen Teilnehmerstation übermittelt wird. Über dieses (visuelle) Bedienungsmenü kann in besonders vorteilhafter Weise der angerufene Teilnehmer über seine Teilnehmerstation die Administrierung der Zusatzdienste in bezug auf die anrufende Teilnehmerstation bzw. auf deren Teilnehmeridentifikationsnummer vornehmen. Beispielsweise kann die anrufende Teilnehmerstation in den Zusatzdienst "Family and Friends" einfach aufgenommen werden, indem die (vorzugsweise angezeigte) Teilnehmeridentifikationsnummer der anrufenden Teilnehmerstation beispielsweise durch entsprechendes Markieren oder Anklicken des gewünschten Zusatzdienstes in dem Menü ("Family and Friends") übernommen wird. In gleicher Weise kann auch ein Zusatzdienst administriert werden, um beispielsweise eine Teilnehmeridentifikationsnummer aus einem Zusatzdienst zu entfernen oder zu ändern.

Ein wesentlicher Aspekt des erfindungsgemäßen Verfahrens ist damit, daß in Abhängigkeit von der Teilnehmeridentifikationsnummer der anrufenden Teilnehmerstation von einer übergeordneten Logik bezüglich dieser anrufenden Nummer die für die angerufene Teilnehmerstation zur Verfügung stehenden Zusatzdienste zusammengestellt und zusammen mit einer Auswahlmöglichkeit der angerufenen Teilnehmerstation übermittelt wird. Dadurch kann in vorteilhafter Weise vor, nach oder während des Gespräches mit der jeweiligen anrufenden Teilnehmerstation die Administrierung der Zusatzdienste erfolgen, ohne daß der Teilnehmer zu aufwendigen Administrationsprozeduren gezwungen ist. Insbesondere entfällt das aufwendige Anrufen einer entsprechenden Servicenummer mit anschließender manueller oder/und sprachgeführter Eingabe der Administrierungswünsche.

Eine vorteilhafte Ausgestaltung der Erfindung besteht darin, daß das Bedienungsmenü als Wireless-Application-Part (WAP)-Seite übermittelt wird.

Der Begriff "Wireless Application-Part" (WAP) bezeichnet eine zunehmend aufkommende Technologie im Rahmen der Telekommunikation, mit der z. B. vorzugsweise mit einem größeren Display ausgestattete Mobilfunkstationen mit dem Internet kommunizieren. Ein wesentlicher Aspekt der Erfindung besteht in dem Einsatz dieser Technologie als komfortables Dialogsystem zwischen Mobilfunkstation und intelligentem Knoten. Die entsprechende WAP-Seite wird von dem intelligenten Knoten oder einer externen Logik (wie dem bereits angesprochenen "Service Manager Point/SMP" (SPC-Cluster)) aufgebaut.

Eine bevorzugte Ausgestaltung des Verfahrens besteht darin, daß das Bedienungsmenü bereits während der Meldung des Rufes an die angerufene Teilnehmerstation übermittelt wird.

In diesem Fall kann der Teilnehmer zu einem besonders frühen Zeitpunkt - ggf. ohne den Anruf überhaupt weiter entgegennehmen zu müssen - den Ruf zur Administrierung seiner Zusatzdienste nutzen.

Ein Ausführungsbeispiel der Erfindung wird nachfolgend anhand einer Zeichnung weiter erläutert; es zeigen:
Figur 1 schematisch den Ablauf des erfindungsgemäßen Verfahrens und
Figur 2 ein Beispiel für ein Bedienungsmenü.

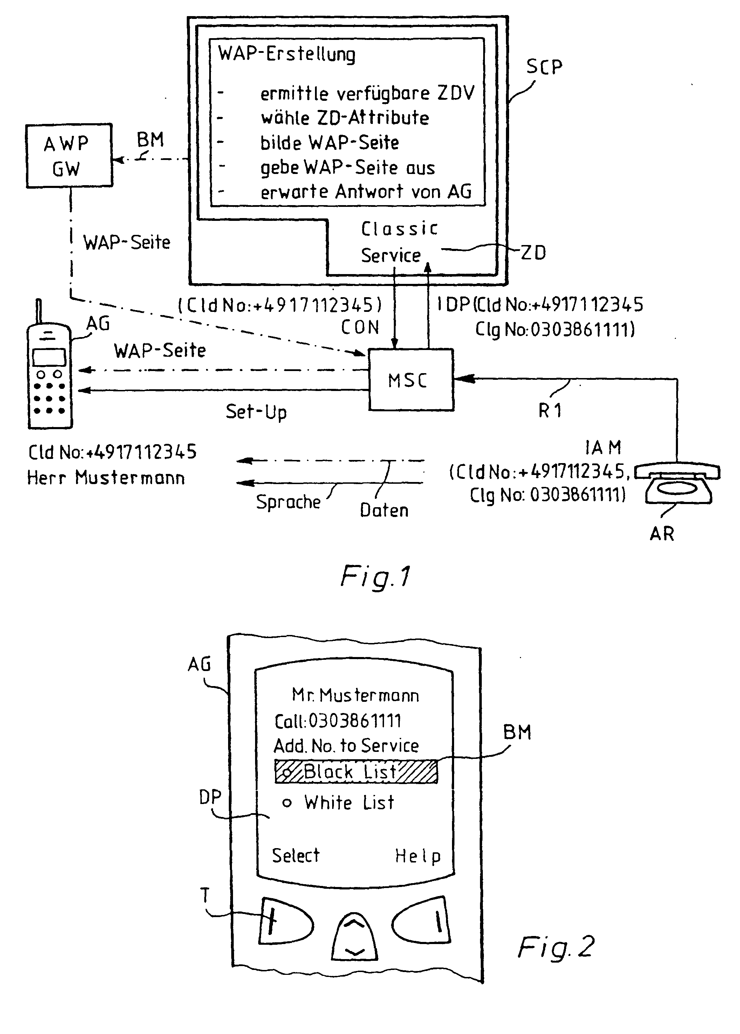

In Figur 1 ist eine Situation dargestellt, in der ein Ruf R1 einer anrufenden Teilnehmerstation AR beispielsweise aus einem Festnetz an eine Vermittlugsstelle ("Mobile Switch") MSC gelangt. Dies kann - je nach verwendeten Protokoll (z. B. ISUP) - in Form einer "Initial Address Message/IAM" erfolgen, die die Teilnehmeridentifikatiensnummer der anrufenden (ClgNo: 0303861111) und der angerufenen Teilnehmerstation (CldNo +4917112345) enthält. In der Figur 1 sind dabei Datenübertragungen mit strichpunktierten Pfeilen dargestellt, während Sprachübertragungen in durchgezogenen Pfeilen dargestellt sind. Die Vermittlungsstelle MSC meldet den eingehenden Ruf gemäß einem standardisierten Protokoll INAP als sog. "Initial Detection Point/(IDP)" unter Nennung der beteiligten Teilnehmeridentifikationsnummern an einen intelligenten Knoten SCP (Service Controll Point). In diesem wird in an sich bekannter ("Classic Service") Weise über die Vermittlungsstelle MSC die Sprachverbindung zu der angerufenen Teilnehmerstation AG hergestellt, die als Mobiltelefon ausgebildet ist. Diese Verbindung ist als INAP-Operation "Connect" CON zwischen dem intelligenten Knoten SCP und der Vermittlungsstelle MSC unter Angabe der angerufenen Teilnehmeridentifikationsnummer CldNo dargestellt. Der intelligente Knoten SCP kann im Rahmen des Verbindungsaufbaus - sofern verfügbar und teilnehmerseitig aktiviert - Zusatzdienste ZD ablaufen lassen. Ein derartiger Zusatzdienst kann beispielsweise der eingangs ausführlich dargestellte Dienst "Friends and Family" oder "Black-List" sein. Dies setzt voraus, daß die Teilnehmeridentifikationsnummer (030386111) der anrufenden Teilnehmerstation AR in die entsprechende Liste des Zusatzdienstes eingetragen ist. Im Falle eines Eintrages in die "Black-List" wird der Anruf nicht zur angerufenen Teilnehmerstation AG durchgestellt bzw. zumindest der verbindungsaufbau nicht komplettiert.

Auf der Basis der verfügbaren Zusatzdienste ZDV - also derjenigen Zusatzdienste, die für die angerufene Teilnehmerstation AG vorgesehen oder bezahlt sind - wird unter Berücksichtigung der Teilnehmeridentifikationsnummer der anrufenden Teilnehmerstation AR (d. h. sofern der jeweilige Zusatzdienst auf die anrufende Teilnehmerstation anwendbar ist) ein Bedienungsmenü BM oder eine Menü-Seite generiert. Bevorzugt werden nur die Zusatzdienste in das Menü aufgenommen, die für die aktuelle Teilnehmeridentifikationsnummer der anrufenden Teilnehmerstation überhaupt aktivierbar bzw. administrierbar sind.

Für die Übermittlung der Bedienungsmenü-Seiten wird die Wireless-Application-Part (WAP)-Technologie verwendet. Hierbei werden die Bedienungsmenü-Seiten als WML (Wireless Markup Language) beschrieben (WAP-Erstellung). WAP bezeichnet eine an sich bekannte, benutzerfreundliche Kommunikationstechnologie, die insbesondere für Mobilfunktelefone mit Internetanschluß entwickelt worden ist. Im Rahmen der Telekommunikationsanwendung wird die WAP-Technologie auch als WTA bezeichnet. Die WAP-Seite wird über ein Wireless-Application-Part Gateway WAPGW an die Vermittlungsstelle MSC und von dort an die angerufene Teilnehmerstation AG übermittelt. Bevorzugt erfolgt dies bereits zusammen mit der Rufmeldung an die Teilnehmerstation AG. Tatsächlich werden wie bereits oben erwähnt zwei Verbindungskanäle etabliert - nämlich ein Kanal zwischen den Teilnehmern (Sprachkanal) und ein Datenkanal zwischen Teilnehmerstation AG und Knoten SCP. Die Korrelation und Koordination dieser Verbindungskanäle erfolgt durch den Knoten SCP bzw. das Management SMP.

Figur 2 zeigt die Darstellung der WAP-Seite auf dem Display DP der angerufenen Teilnehmerstation AG. Der angerufene Teilnehmer (Herr Mustermann) kann im Display DP die Teilnehmeridentifikationsnummer (Call: 0303861111) der anrufenden Teilnehmerstation erkennen und durch einfaches Menü (Balken auf/ab) und entsprechende Betätigung der Taste T (Select) die Nummer beispielsweise der "Black-List" hinzufügen (Add No to Service). In entsprechender weise ist es auch möglich, die Rufnummer der "White-List" hinzuzufügen bzw. aus dieser wieder zu entfernen. Diese Eingabe zur Dienst-Administrierung wird dem Knoten SCP mittels WAP-Technologie zugeleitet, der die Zusatzdienste ZD entsprechend aktualisiert.

Damit ist dem Teilnehmer eine sehr elegante rufbezogene Administrierungsmöglichkeit angeboten, die mittels WAP/WTA-Technologie sehr einfach und mit wenigen Tastenbedienungen ausgeübt werden kann. Der Inhalt des Bedienmenüs wird dem Teilnehmer vorteilhafterweise visuell präsentiert, so daß die einleitend beschriebenen aufwendigen Sprachdialoge und umfangreichen Eingaben entfallen. Eine entsprechende Realisierung ist möglich, wenn der Ruf von einer mobilen Teilnehmerstation ausgeht ("Mobile Originating Call / MOC").

## Patentansprüche

1. Verfahren zum Administrieren von Zusatzdiensten bei Telekommunikationseinrichtungen, wobei
- ein Ruf (R1) von einer anrufenden Teilnehmerstation (AR) einem intelligenten Knoten (SCP) zugeleitet wird, der teilnehmerseitig aktivierte Zusatzdienste ablaufen läßt und ggf. den Ruf (R1) zu der angerufenen Teilnehmerstation (AG) durchstellt, und
- auf Basis der verfügbaren Zusatzdienste (ZDV) ein Bedienungsmenü (BM) generiert wird, das der angerufenen Teilnehmerstation übermittelt wird und das die Administrierung der Zusatzdienste (ZDV) in Bezug auf die anrufende Teilnehmerstation (AR) ermöglicht.

2. Verfahren nach Anspruch 1, bei dem
- das Bedienungsmenü (BM) als Wireless-Application-Part (WAP)-Seite übermittelt wird.

3. Verfahren nach Anspruch 1 oder 2, bei dem
- das Bedienungsmenü (BM) bereits während der Meldung des Rufes an die angerufene Teilnehmerstation (AR) übermittelt wird.

## Claims

1. Method for administering supplementary services in telecommunication systems, wherein
- a call (R1) from a calling subscriber station (AR) is routed to an intelligent node (SCP) which runs supplementary services activated by the subscriber and possibly switches the call (R1) through to the called subscriber station (AG), and
- an operating menu (BM) which is transmitted to the called subscriber station and which provides for the administration of the supplementary services (ZDV) with respect to the calling subscriber station (AR) is generated on the basis of the available supplementary services (ZDV).

2. Method according to Claim 1, wherein
- the operating menu (BM) is transmitted as a WAP (wireless application part) page.

3. Method according to Claim 1 or 2, wherein
- the operating menu (BM) is already transmitted during the signalling of the call to the called subscriber station (AR).

## Revendications

1. Procédé de gestion de services supplémentaires dans des dispositifs de télécommunication, dans lequel
- on transmet un appel (R1) d'un poste d'abonné appelant (AR) à un noeud intelligent (SCP) qui laisse s'exécuter des services supplémentaires activés du côté de l'abonné et qui commute éventuellement l'appel (R1) vers le poste d'abonné appelé (AG), et
- sur la base des services supplémentaires disponibles (ZDV), on produit un menu de commande (BM) qui est transmis au poste d'abonné appelé et qui permet la gestion des services supplémentaires (ZDV) en référence au poste d'abonné appelant (AR).

2. Procédé selon la revendication 1, dans lequel
- on transmet le menu de commande (BM) sous la forme d'une page Wireless Application Part (WAP).

3. Procédé selon la revendication 1 ou 2, dans lequel
- on transmet déjà le menu de commande (BM) pendant la signalisation de l'appel au poste d'abonné appelé (AR).
